# EUROPEAN PATENT SPECIFICATION

(11) **EP 3 722 153 B1**
(45) Date of publication and mention of the grant of the patent: **18.05.2022**
(21) Application number: 20169124.3
(22) Date of filing: 09.04.2020
(51) Int. Cl.: B60R 1/00

(54) **IMPROVED SAFETY DEVICE FOR VEHICLES**
VERBESSERTE SICHERHEITSVORRICHTUNG FÜR FAHRZEUGE
DISPOSITIF DE SÉCURITÉ AMÉLIORÉ POUR LES VÉHICULES

(30) Priority: 11.04.2019 IT 201900005598
(43) Date of publication of application: 14.10.2020
(73) Proprietor: Ribighini, Antonio, 60121 Ancona (IT)
(72) Inventor: Ribighini, Antonio, 60121 Ancona (IT)
(74) Representative: Minghetti, Mauro

(56) References cited:
- WO-A1-2013/093603
- JP-A- H0 891 158
- US-A1- 2009 243 824
- US-A1- 2010 171 832
- US-A1- 2010 201 816
- US-B1- 10 239 456

## Description

### TECHNICAL FIELD OF THE INVENTION

The present invention relates to an improved safety device for vehicles.

More in particular, the present invention relates to improved devices for increasing the active safety of cycles, mopeds, motorcycles and all other types of vehicles, integrating the functions of the displays and rear-view mirrors currently supplied to vehicles in general.

Even more in detail, the present invention provides for the adoption of special devices to integrate the functions of the displays and rear-view mirrors to allow the driver/rider to have a clear, complete and panoramic rear view, without blind spots and incorrect assessment of the distances, while the vehicle moves forward, thus increasing the active safety of bicycles, cycles, mopeds, motorcycles and all other types of vehicle in general.

Furthermore, in a version of the invention, the device allows cyclists not to have to take a hand off the handlebars to manage the information of the on-board computer, all to the advantage of active safety.

### BACKGROUND ART

When travelling on a road in/on a vehicle, of whatever type it may be, it is extremely important, as far as traffic safety is concerned, to be able to view and check what is happening behind one's back and on both sides.

The need for rear vision when travelling in/on a vehicle has been felt right from the beginning.

As early as in the first models of motor cycles and cars, in order to be able to view and check what was happening at the rear, at least one rear-view mirror was provided on the handlebars of the motor cycles; cars were instead equipped with a rear view mirror placed in the centre of the dashboard or windscreen.

In more recent years, the need for wider rear vision has been appropriated by the legislator, who has required the adoption of one or two rear-view mirrors in motor cycles; for motor cars, in addition to the internal central mirror, first an external mirror on the left side and then an additional one on the right side were made mandatory.

Similar obligations have also been provided for other vehicles such as trucks, lorries, buses, coaches, caravans, etc. - proving the importance, in terms of active driving safety, while the vehicle is travelling forward, to be able to provide the driver with the clearest, most complete and panoramic vision possible.

Rear vision in vehicles, in particular cycles, motorcycles, buses, trucks and caravans, is still today very poor and incomplete, or even absent.

In actual fact:
- cycles have no obligation to fit rear-view mirror(s), and cyclists therefore have no knowledge of what is happening behind them, being thus exposed to the risks that this entails;
- motorcycles and mopeds are equipped with one or two small rear-view mirrors, which allow only for partial rear vision without central vision, i.e. the most important one;
- buses, trucks, caravans, etc. have only two external rear-view mirrors, of large dimensions and sometimes double, which allow for only partial rear vision, without central vision, i.e. the most important one;
- only for motor cars is rear vision now achieved with three rear view mirrors, the use of which however implies various limitations and problems.

More in particular, it is noted that the use of rear-view mirrors implies for the driver of a motor car the following limitations and problems which, as the case may be, are also shared by drivers of other types of vehicles:
- the external mirrors, unlike the internal one, provide an incorrect assessment of the distances from vehicles that follow;
- to have rear vision that is as complete as possible, it is necessary for the driver to look away from the vehicle travelling direction for a relatively long period of time, necessary to look first in the left-hand external mirror, then in the central internal mirror and finally in the right-hand external one;
- the rear view reflected by the internal mirror is definitely limited by the pillars and dimensions of the rear window, the headrests of the rear seats, the passengers and/or luggage covering the rear window.

Recently, to make only reverse driving safer, some vehicles often have, as an option, a video camera positioned in the rear part of the vehicle; the images taken by this camera are displayed on a display usually installed in the dashboard in a central position, also used for other functions such as displaying radio, DVD, external music sources information and for viewing map or navigator images and data, and more recently a whole range of other information or data relating to the vehicle.

Typically, the video camera activates automatically when the driver engages the reverse gear; however, it does not work during normal forward travelling.

Even more recently, in car trade shows, some "concept cars" have featured video cameras with dedicated displays to replace the rear view mirrors; the innovation was displayed for cars only and is expensive and bulky, due to the presence of one or more additional displays above the dashboard which, among other things, limit front vision; on the other hand, the solution to replace/eliminate rear-view mirrors is not allowed by the current regulations in individual Countries, and is therefore unachievable.

As regards, in particular, the displays with which the various types of vehicle are currently equipped, the following is observed.

Traditional, or muscle powered, cycles are generally not equipped with displays, except, sometimes, a small display that can be installed as an accessory to view information of the on-board computer (total and partial mileage, average, maximum and minimum speed, track of the route followed and to be followed, date and time, cyclist's calorie consumption, heart rate, blood pressure, etc.).

This information is shown sequentially by pressing one or more buttons located in the box-like element which also contains the display.

Cycles with pedal assistance usually have a display that permanently or sequentially displays the battery status, the level of pedal assistance required, information from the on-board computer, etc.

Motorcycles and mopeds, which no longer adopt traditional circular needle instruments (odometer and tachometer) are generally equipped with a display - usually large in size - located in the centre of the handlebars, which displays, in addition to engine speed and rpm, a range of additional information.

Motorcycles and mopeds that adopt traditional circular needle instruments, on the other hand, are generally equipped with a small display placed between the two circular instruments, which displays various information relating to the vehicle. Cars, buses, caravans, trucks, lorries generally are supplied with at least two displays.

A first display is generally placed in front of the steering wheel; it displays - usually analogically - the vehicle speed, engine revolutions and other on-board computer information (instant and average consumption, total or partial mileage, etc.); some of the data or information appear sequentially by pressing a special button provided on the steering wheel, or near the steering wheel.

In other cases, this smaller-size display is interposed between the two traditional circular needle instruments, and it displays information such as instant and average consumption, total and partial mileage, etc.; also in these cases, some of the information appears sequentially by pressing a special button provided on the steering wheel or near the steering wheel.

A second display is placed in the central part of the dashboard, generally lower than the first.

Currently, this second display is used to alternately view:
- information from the radio, or from the DVD, or from external music sources;
- the images or information of the map or navigation system;
- the images of the rear view camera when reversing, for vehicles equipped with it;
- any other information, of various nature. Document WO 2013/093603 A1 discloses a safety device according to the preamble of claim 1.

### OBJECTS OF THE INVENTION

The technical aim of the present invention is to improve the current state of the art in the field of safety equipment for bicycles, mopeds, motorcycles and all other types of vehicles, both for newly manufactured ones and for those already in circulation, in order to increase their active safety.

Within the scope of this technical aim, it is an object of the present invention to make a safety device available for vehicles that allows the driver to have clear, complete and panoramic rear vision on both sides, almost without taking their eyes off the forward travelling direction.

Another object of the present invention is to develop a vehicle safety device that can be adopted immediately by the manufacturers, in compliance with the regulations of the individual Countries, both for newly manufactured vehicles and for those already in circulation.

A further object of the present invention is to provide a vehicle safety device which can be activated in a simple, easy and safe way, without risks for the driver/rider.

Yet another object of the present invention is to provide a safety device for cycles consisting in an "aftermarket" product, or installable on newly manufactured cycles, which allows cyclists not to have to take a hand off the handlebars to manage the on-board computer information, all to the advantage of active safety.

This aim and these objects are all achieved by the improved safety device for vehicles according to the appended claim 1.

Dependent claims refer to preferred and advantageous embodiments of the invention.

### BRIEF DESCRIPTION OF DRAWINGS.

These and additional advantages will be better understood by any man skilled in the art from the following description and accompanying drawings, provided by way of non-limiting example, in which:
Figure 1 is a schematic rear view of a car, on which the device according to the invention is installed;
Figure 2 is a schematic rear view of a truck, on which the device according to the invention is installed;
Figure 3 is a schematic rear view of a bus, on which the device according to the invention is installed;
Figure 4 is a schematic rear view of a motor cycle, on which the device, in an embodiment which is not part of the invention, is installed;
Figure 5 is a schematic view of a dashboard of a car, on which the device according to the invention is installed;
Figure 6 is a schematic front view of the instrument panel of the car of figure 5, wherein the rear viewing function is not active;
Figure 7 is a schematic front view of the same instrument panel of figure 6, wherein the rear viewing function is active;
Figure 8 is a schematic front view of the instrument panel of the car according to another embodiment of the invention, wherein the rear viewing function is not active;
Figure 9 is a schematic front view of the same instrument panel of figure 6, wherein the rear viewing function is active;
Figure 10 is a schematic detailed front view of the front end of a motorcycle on which the device, in an embodiment which is not part of the invention, is installed, wherein the rear viewing function is not active;
Figure 11 is a schematic detailed front view of the instrument panel of the motorcycle of figure 10, wherein the rear viewing function is active;
Figure 12 is a schematic top view of the front end of a motorcycle on which the device, in an embodiment which is not part of the invention is installed, and with the rear-view mirrors in an open configuration;
Figure 13 is a schematic top view of the motorcycle of figure 12, with the rear-view mirrors in a closed configuration;
Figure 14 is a schematic detailed front view of the front end of a motorcycle on which the device, according to another embodiment which is not part of the invention, is installed, and wherein the rear viewing function is not active;
Figure 15 is a schematic front view of a detail of the instrument panel of the motorcycle of figure 14, wherein the rear viewing function is active;
Figure 16 is a schematic top view of the front end of another motorcycle on which the device, in an embodiment which is not part of the invention, is installed, and with the rear-view mirrors in an open configuration;
Figure 17 is a schematic top view of the motorcycle of figure 16, with the rear-view mirrors in a closed, or inactive, configuration;
Figure 18 is a perspective view of a cycle, on which the safety device according to the invention is installed;
Figure 19 is a perspective detailed view of the front end of the cycle of figure 18, wherein in the display the rear viewing function is not active;
Figure 19A is a perspective detailed view of the front end of the cycle of figure 19, wherein in the display the rear viewing function is not active, in another embodiment which is not part of the invention;
Figure 20 is a perspective detailed view of the display of the cycle of figure 18, wherein the rear viewing function is active;
Figure 21 is a schematic perspective view of the device display support, according to another embodiment, in a use configuration;
Figure 22 is a schematic side view of the support of figure 21;
figure 23 is a schematic perspective view of the support of figure 21, in another use configuration;
Figure 24 is a perspective view of the front end of a motorcycle on which the device, according to another embodiment which is not part of the invention, is installed;
Figure 25 is a schematic view of the device display support, according to the embodiment of figure 24;
Figure 26 is a side view of a cycle on which the device in another embodiment which is not part of the invention, is installed;
Figure 27 is a perspective detailed view of the front end of the cycle of figure 26.

### EMBODIMENTS OF THE INVENTION.

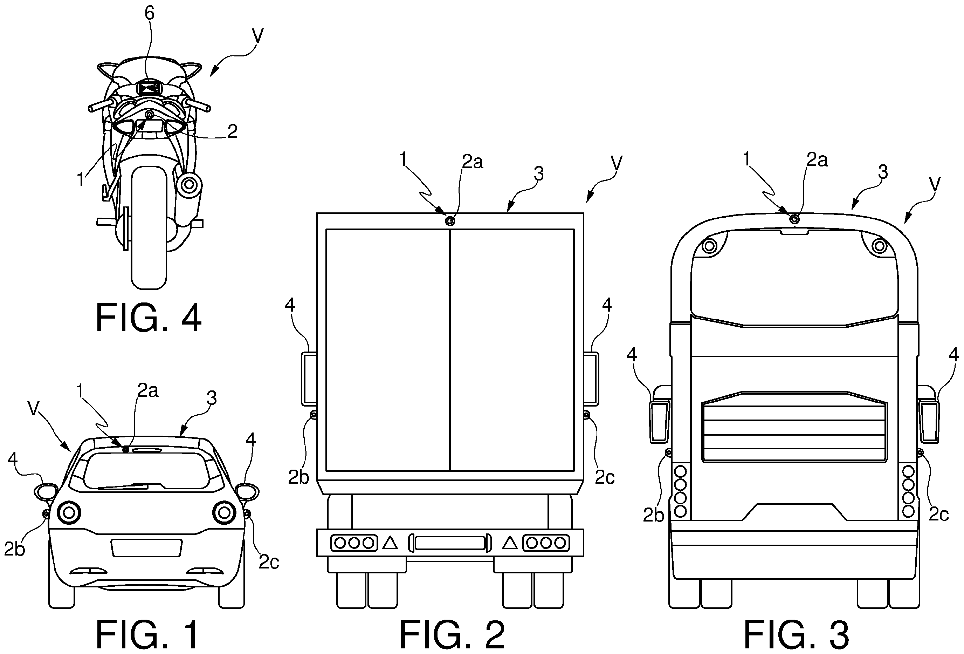

With reference to figure 1, an improved safety device for vehicles, according to the present invention, is generally indicated with 1.

Figure 1 shows a vehicle V consisting in a car; the vehicle V could however be of any other type, for example a truck (Figure 2), a bus (Figure 3), or other, without any particular limitations for the purposes of the present invention.

Within the scope of the present invention, for each type of vehicle V, a device 1 has been developed with specifically devised characteristics.

The device 1 comprises at least one video camera 2, or a plurality of video cameras 2a, 2b, 2c.

The video camera 2, or each of video cameras 2a, 2b, 2c, can be of any type suitable for the application: for example, it can be a mini-video camera.

The video camera 2, or each one of the video cameras 2a, 2b, 2c, can be installed in a portion of the outer rear surface 3 of the vehicle V, oriented so that its lens faces substantially in the direction opposite to the travelling direction of the vehicle V itself.

In other words, the video camera 2, or each one of the video cameras 2a, 2b, 2c, is oriented so that its lens can film the surrounding environment behind the vehicle V with respect to the normal forward travelling direction.

In two-wheeled vehicles V (cycles, motorcycles) the device 1, which is not part of the present invention, preferably comprises a single video camera 2, installed in the rear area of the vehicle V itself.

For example, the single video camera 2 can be installed under the seat of vehicle V. In the other types of V vehicles (cars, trucks, buses, etc.), the device 1 comprises one or more cameras 2a, 2b, 2c.

More in detail, in some embodiments of the invention of particular practical interest, the device 1 comprises at least three video cameras 2a, 2b, 2c, or even a higher number of cameras.

The above mentioned three video cameras 2a, 2b, 2c comprise a central video camera 2a, and two side video cameras 2b, 2c.

The central video camera 2a can be installed in the rear area of the vehicle V, preferably in the centre, and preferably in a position from which the shots are optimal: for example, it can be positioned at the top of the rear area, as shown in figures 1-3, or possibly even lower, in the area of the plate holder.

The central video camera 2a can have a tilt and zoom function so as to provide a more panoramic and remote view when the vehicle V is driven forward, and a more narrow and downward-directed view towards the road while the vehicle is reversing. The side video cameras 2b, 2c are preferably installable in positions that allow the driver to have a rear view as close as possible and comparable to that which is obtained by checking the traditional side rear-view mirrors.

For this reason, the side video cameras 2b, 2c, in an embodiment of the invention of particular practical interest, can be installed in the bodywork of the vehicle V under the two side external rear-view mirrors 4.

This could allow, in the future, to completely eliminate the external rear-view mirrors in the event of changes in the traffic regulations.

Furthermore, the side video cameras 2b, 2c do not interfere with the driver's direct side vision.

However, in other embodiments of the invention, the side video cameras 2b, 2c of device 1 could be provided in other areas of the external rear surface 3 of the vehicle V, if certain design/application requirements require it.

The side video cameras 2b, 2c can be adjustable in position, like the current mirrors, with manual or electric devices to optimize vision on the sides according to height, and according to the needs of the driver; the side video cameras 2b, 2c could also be automatically positioned downwards when the reverse gear is engaged.

The device 1 furthermore comprises at least one processing unit 5.

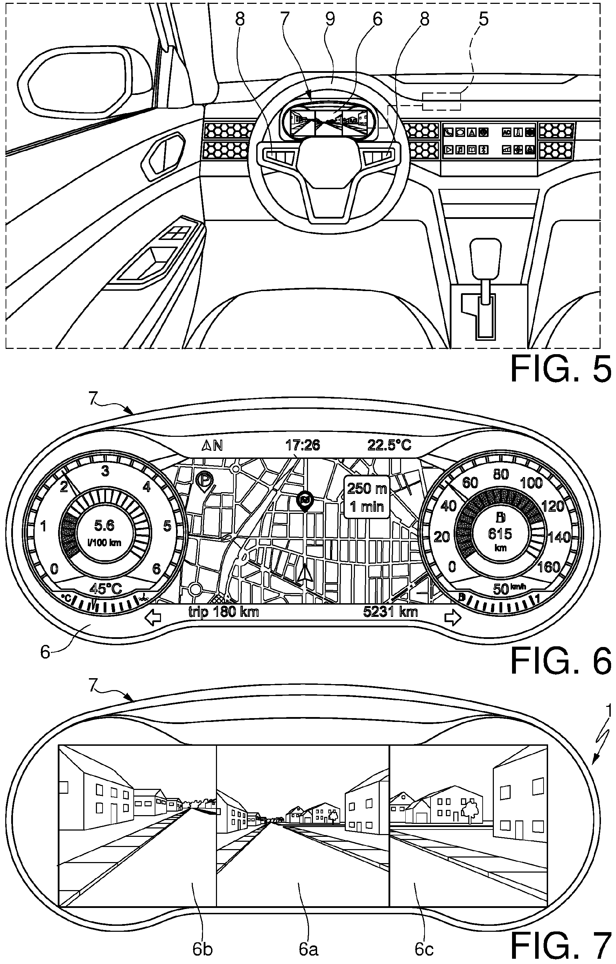

The processing unit 5 is shown schematically with broken lines, and for the sole purpose of a better understanding, in Figure 5.

The single video camera 2, or the plurality of video cameras 2a, 2b, 2c, is operatively connected to, and controlled by, the processing unit 5.

The processing unit 5 can be the same already present in the vehicle V (for example, the control unit of the vehicle V, or a specific sub-unit of the control unit), or it can be an autonomous unit, only appointed to manage the device 1 according to the invention.

The device 1 also comprises at least one display 6.

The display 6 is operatively connected to the processing unit 5.

The display 6 is suitable for viewing the images taken by the single video camera 2, or by the plurality of video cameras 2a, 2b, 2c.

More particularly, according to the invention, the display 6 is suitable for viewing the images taken by the single camera 2, or by the plurality of video cameras 2a, 2b, 2c, when the vehicle V travels in the forward direction.

In this way the driver, at any time as the vehicle V is travelling forward, can watch and control what is happening behind them.

For example - but not by way of limitation - the driver can monitor and detect the movement of the vehicles that follow them, to avoid, in turn, performing actions or movements that could put them and/or other vehicles in a situation of potential danger.

According to an aspect of the present invention, the display 6 is positioned, in the vehicle V, so that the driver can monitor it quickly and effectively without taking their eyes off the travelling direction for too long.

In a version of the invention, which refers in particular to newly manufactured vehicles V (see for example figure 5), the display 6 is positioned inside the instrument panel 7 of the vehicle V, in a front position with respect to the driving position.

According to a possible and advantageous positioning, the display 6 is provided in the middle of the instrument panel 7; in this position, the display 6 can be immediately viewed by the driver of the vehicle V by simply lowering their gaze slightly from the travelling direction, for even just a few seconds.

The dimensions of the display 6 are such as to allow the driver to have a clear, sharp and complete view, compatibly with the space available inside the instrument panel 7.

Obviously, V vehicles equipped with large instrument panels 7 are advantaged from this point of view.

Furthermore, as better described below, inside the instrument panel 7 the display 6 is as large as possible, precisely for the driver needing to have a clear, sharp and full vision while driving.

According to an aspect of the invention, therefore, the display 6 is a display already supplied to the vehicle V; therefore, there is no need to provide another special display.

According to another aspect of the invention, the device 1 comprises a control 8. The control 8 is operatively connected to the processing unit 5.

The control 8 can be operated by the driver at their own discretion, and is suitable for activating the video camera 2 (or the plurality of video cameras 2a, 2b, 2c), and therefore the rear view function, in real time, on the display 6.

In this version of the invention, the control 8 is suitable for selectively modifying, at the discretion of the driver of the vehicle V, the mode of use of the display 6 from a first mode, wherein the rear display function is not active, to a second mode, wherein the rear display function is active, and vice versa.

In other words, in the first mode of use, the display 6 works like a traditional display, i.e., it shows the normal information relating to the vehicle, and possibly also graphics and/or images, if it is provided to operate in this way (for example, images or graphics of the navigator, of the radio, or even images or graphics that simulate analog instruments, etc.).

In the second mode of use, however, the display 6 is controlled for viewing, in real time, the images taken by the single video camera 2, or by the plurality of video cameras 2a, 2b, 2c.

This means that the driver, only and exclusively when they wish, may decide to instantly change the way in which the display 6 is used to activate the rear view generated by the video cameras 2, 2a, 2b, 2c.

The control 8 can be of the manually operated type; the control 8 can consist, for example, of a button, a lever, a knob or the like.

The control 8, if it is of the manually operated type, is preferably provided in an area of the vehicle V, or of the passenger compartment of the vehicle V, easily and quickly accessible for the driver.

For example, in the case of a vehicle V consisting of a car, or a truck, or a bus, the control 8 can comprise (or consist of) a button (or lever, or knob) located on the steering wheel 9, for example on the spokes of the steering wheel 9 (figure 5), or also on the inside of the wheel of the steering wheel, or near it.

Thanks to this solution, the driver can change the way the display 6 is used quickly and easily even without taking their eyes off the driving i.e. the travelling direction. In a typical situation, described only by way of non-limiting example, if the driver wishes to overtake, or change lanes, they can then operate the control 8 to activate, even if only for a few moments, the rear view, so as to ensure that there are no approaching vehicles and that there is sufficient space and the necessary safety conditions.

The control 8 can be configured so as to allow the operating mode to be changed (in particular changing from the first mode to the second mode, in which the rear view is active) only when the driver actively works it: for example, in the event that the control 8 is a button, this means that the rear display is activated only when the driver holds down the aforesaid button (and it is therefore deactivated when the button is released).

Or, the control 8 can be configured so as to allow the operating mode to be changed (from first to second, and vice versa) through a simple press or touch.

For example, if the control 8 is a button, this means that a simple and instantaneous press of this button causes the switching from the first mode of use to the second mode of use, while a further instantaneous press of the button returns the display 6 again to the first mode of use.

In this configuration, therefore, the driver can keep the rear view function active for as long as they wish, without having to hold down the button of the control 8.

It may also possibly be provided that the driver may choose/set their preferred configuration of use of the control 8 (simple press, press and hold, etc.).

As shown in Figure 5, the device 1 can also comprise several actuation controls 8, to make the driver's gestures easier (for example, two identical and symmetrical buttons on the steering wheel 9 in the case of a vehicle consisting of a car, truck, bus, etc.).

In other embodiments of the invention, the actuation control 8 can also be of the non-manual type.

For example, in some embodiments the control 8 could be of the vocal type, or of another type, without any particular limitations to the purposes of the present invention.

The embodiment of the invention illustrated in detail in Figures 6,7 refers, in particular, to a vehicle V of the type of cars, trucks, buses, etc., comprising an instrument panel 7 entirely consisting of a single display 6 (for example of the LCD type or the like), which in the first mode of use (figure 6) shows, on a full screen, parameters and information relating to the vehicle, as well as graphics and images (images of the navigator, and/or emulation of analog instruments, and/or other).

In the second mode of use (Figure 7), which can be activated by the control 8, the display 6 allows rear images to be displayed taken by the video cameras 2a, 2b, 2c. In particular, in this second mode of use the display 6 comprises at least three rear display portions 6a, 6b, 6c side by side, i.e. one central portion 6a and two side portions 6b, 6c, which show, in real time, the images taken by the three video cameras 2a, 2b, 2c, respectively.

Since, as mentioned, the instrument panel 7 is entirely made up of a single display 6, the three rear display portions 6a, 6b, 6c can have an overall surface that substantially corresponds to the entire surface of the display 6 (possibly, subject to minor differences due to the shape of the instrument panel 7 itself).

This solution is certainly to be preferred as it allows to obtain a rear view with maximum surface extension, obviously in relation to the working dimensions of the instrument panel 7.

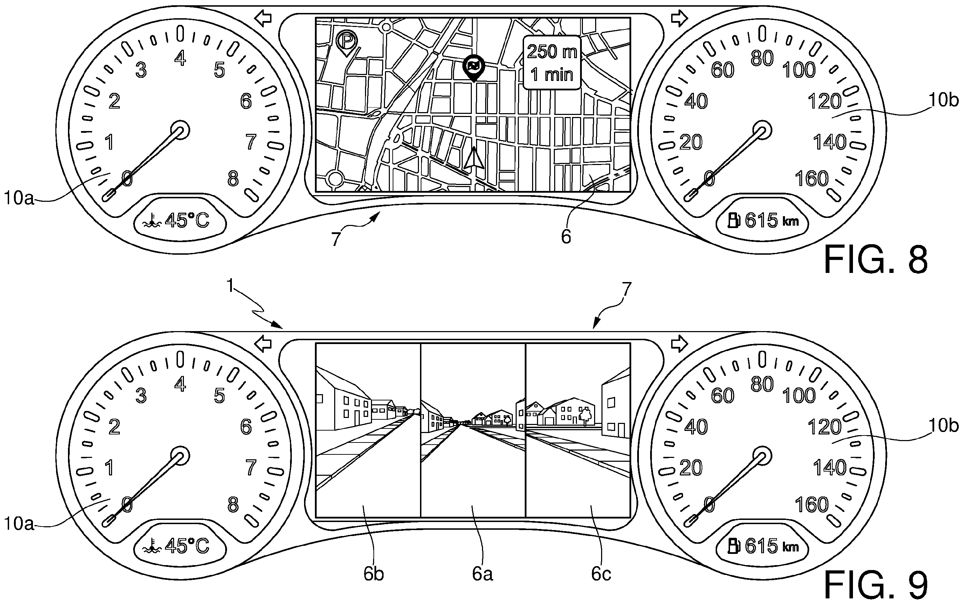

The embodiment of the invention illustrated in detail in Figures 8,9 refers, instead, to a vehicle V of the type of cars, trucks, buses, etc. equipped with a more traditional type of instrument panel 7, comprising at least one analog instrument 10a, 10b. For example, the embodiment of Figures 8,9 includes, more particularly, two analog instruments 10a, 10b (typically, but not exclusively, an odometer and a tachometer) between which at least one display 6 is comprised.

The aforementioned display 6, in the first mode of use (Figure 8), shows parameters and information relating to the vehicle, and/or graphics and images (images of the navigation system, and/or simulation of analog instruments, and/or other).

Again, in the second mode of use (Figure 9), which can be activated by the control 8, the display 6 allows rear images to be displayed, taken by the video cameras 2a, 2b, 2c.

Also in this case, the display 6 comprises three rear display portions 6a, 6b, 6c side by side, i.e. a central portion 6a and two side portions 6b, 6c.

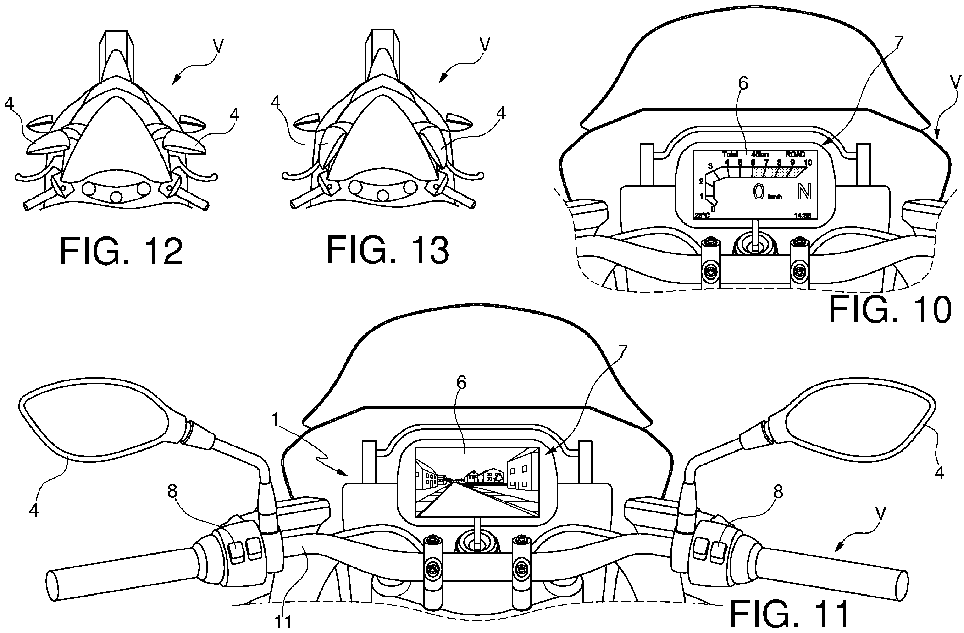

This solution is, therefore, indicated in situations where the vehicle V is intended to be equipped with an instrument panel 7 equipped with analog instruments 10a, 10b. The embodiment illustrated in Figures 10,11, which is not part of the invention, refers to a device 1 installed on a motorcycle V.

In particular, it is a motorcycle in which the instrument panel 7 is entirely made up of a single display 6 (similarly to the embodiment of Figures 6,7).

In this case (and also with reference to Figure 4) the device 1 comprises, as was said, a single video camera 2; consequently, the display 6 also comprises a single rear display portion (which therefore may have a surface substantially corresponding to that of the entire display 6).

More in detail, Figure 10 refers to the first mode of use of the display 6, wherein the display works in the traditional way, showing data, parameters, graphics relating to the vehicle.

Figure 11 refers instead to the second mode of use of the display 6, wherein the display shows, in real time and on full screen, the images taken by the single video camera 2.

The control 8, in this embodiment of the device 1, can comprise (or consist of) at least one button associated with the handlebar 11 of the motorcycle V.

Therefore the rider, while riding, if they want to activate the rear display function, activates the control 8 (for example, by pressing the button on the handlebars 11), and thus determining the shifting of the display 6 from the first mode of use (Figure 10) to the second mode of use (Figure 11).

Also in this embodiment, the configuration of the control 8 can be of the active actuation type (i.e. the second mode of use is active only as long as the control 8 is actually activated) or with actuation determined by a single touch to activate/deactivate the second mode of use.

As can be understood, among the technical advantages of the device 1 according to the invention there is also - theoretically, and if desired - the possibility of completely giving up the use of the side rear-view mirrors 4.

As a consequence of this, the vehicle V which incorporates the device 1 according to the invention can be provided with side rear-view mirrors 4 with variable configuration, in particular, foldable.

As shown schematically in Figures 12, 13, therefore, the motorcycle V can comprise side rear-view mirrors 4 which can switch from the normal open use configuration (Figure 12) to a closed configuration (Figure 13), wherein they are not used, since rear vision is guaranteed by device 1.

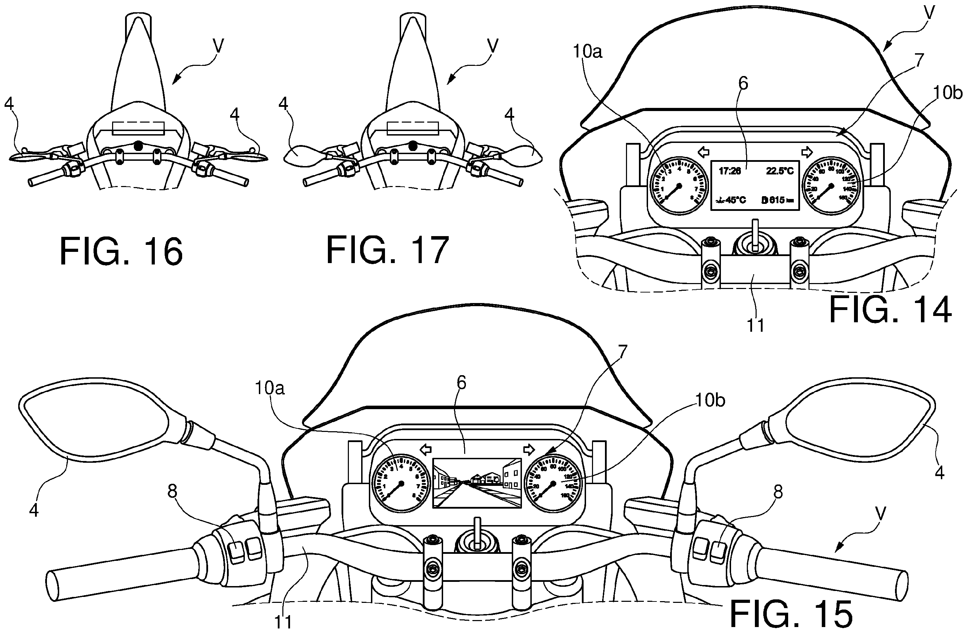

The latter configuration also improves the aerodynamic performance of vehicle V. Also, the embodiment illustrated in Figures 14, 15, which is not part of the invention, refers to a device 1 installed on a motorcycle V (of a different type from that of the embodiment of Figures 10, 11).

In this case, it is a motor cycle V wherein the instrument panel 7 comprises at least one analog instrument 10a, 10b; in more detail, this instrument panel 7 comprises two analog instruments 10a, 10b (typically an odometer and a tachometer) between which at least one display 6 is included.

In this embodiment, too, the device 1 comprises a single rear video camera 2; consequently, the display 6 also comprises a single rear viewing portion (which therefore may have a surface substantially corresponding to that of the entire display 6).

More in detail, Figure 14 refers to the first mode of use of the display 6, wherein the display works in the traditional way, showing data, parameters, graphics relating to the vehicle.

Figure 15 refers, instead, to the second mode of use of the display 6, wherein the display shows, in real time, the images taken by the single video camera 2, thus allowing for displaying the rear view from the motor cycle V.

Also, in this embodiment of the device 1, the control 8 can comprise (or consist of) at least one button associated with the handlebars 11 of the motorcycle V.

The same considerations expressed with regard to the embodiment of Figures 10,11 apply; in particular, also in this embodiment, the motorcycle V can be provided with side mirrors 4 with variable configuration.

In more detail, in this embodiment the side rear-view mirrors 4 can be movable from a normal configuration of use (Figure 16), to a configuration of low drag (Figure 17), wherein they are - for example - rotated so as to be arranged to be substantially parallel to the horizontal plane.

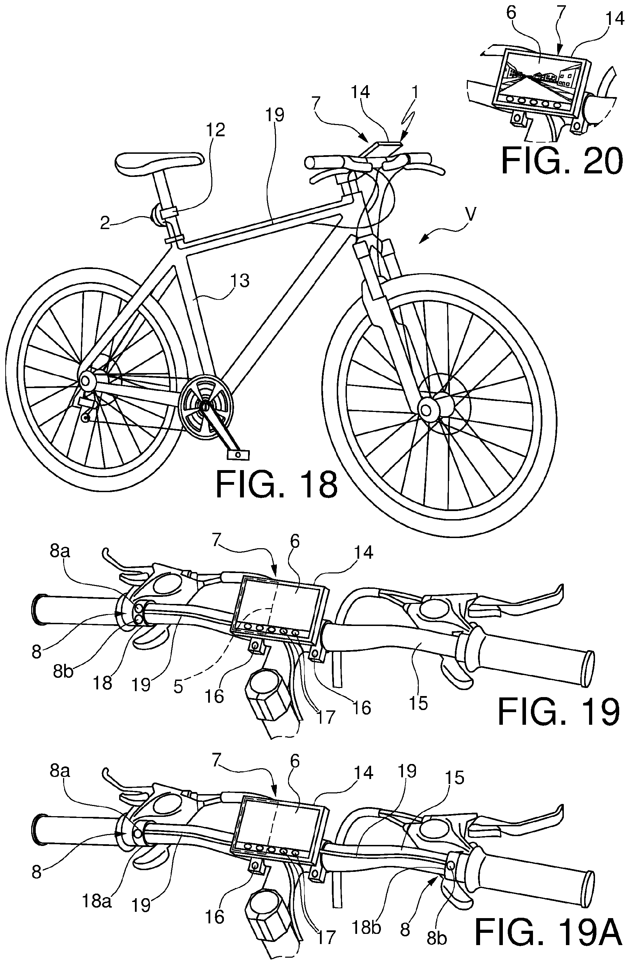

In the embodiment of Figures 18-20, which is not part of the invention, the vehicle V comprising the device 1 is a cycle, or bicycle.

This embodiment can be indicated for newly manufactured cycles V; however, the entire device 1 can consist of a complete kit that can be installed on any cycle V. More specifically, the video camera 2 can be associated with a respective bracket 12, or another equivalent support element, which can be fixed to the rear part of the frame 13 of the cycle V.

In this embodiment, the device 1 can comprise an instrument panel 7 which comprises a box-like element 14 which can be fixed to the handlebars 15 of the cycle V.

The box-like element 14 can be fixed to the handlebar 15 by means of clamps 16, which can be of any suitable type.

The processing unit 5 is housed inside the box-like element 14; moreover, the box-like element 14 houses the display 6.

The box-like element 14 can comprise buttons 17 for controlling the viewing functions of the display 6, in particular in its first mode of use.

The control 8 comprises an element 18 for fixing to the handlebar 15 of the bicycle V.

The fixing element 18 can consist, for example, of a ring, a clamp, or the like.

The control 8 can comprise a first button or a lever 8a, adapted to activate/deactivate the second mode of use of the display 6, associated with the fixing element 18.

In addition, the control 8 can comprise a second button 8b for controlling the viewing functions of the display 6 in its first mode of use.

The second button 8b is also integrated in the same fixing element 18.

In more detail, the second button 8b allows the cyclist to select the various pieces of information to be displayed sequentially, without taking their hands off the handlebars 15.

In this way the information can be displayed clearly and in a larger size (even taking up the whole screen) and riding safety is not jeopardized.

In another embodiment, shown in Figure 19A, which is not part of the invention, the first button 8a and the second button 8b are associated with a first fixing element 18a and a second fixing element 18b - respectively, provided near the two opposite handles of the handlebars 15.

With this solution, the cyclist can, with one hand (via the first button 8a) control the transition from the first mode to the second mode of use of the display 6, and vice versa; they can also, with the other hand (via the second button 8b), select the information to be displayed sequentially, forward or backward.

Thanks to these solutions, in particular, the cyclist can avoid pressing the control buttons 17 on the display to view different information.

The various components of the device 1 - in particular the box-like element 14, the video camera 2 and the control 8 - can be connected by cables 19 fixed along various parts of the frame 13 or of the handlebars 15.

Figure 19 refers to the first mode of use of the display 6, wherein the display works in the traditional way, showing data, parameters, graphics relating to the vehicle.

Figure 20 refers instead to the second mode of use of the display 6, wherein the display shows, in real time, the images taken by the single video camera 2, thus allowing the rear view from the cycle V to be displayed.

Also in this embodiment, the configuration of the control 8 can be of the active actuation type (i.e. the second mode of use is active only as long as the control 8 is actually activated) or with actuation determined by a single touch to activate/deactivate the second mode of use.

In other versions, which are not part of the present invention, which concern in particular vehicles already in circulation, it is provided for the setting and installation of a complete kit in which the rear view display 6 is incorporated in a support 20 which can be installed in the vehicle V, in place of at least one of the rear-view mirrors, or can be installed inside the passenger compartment of vehicle V.

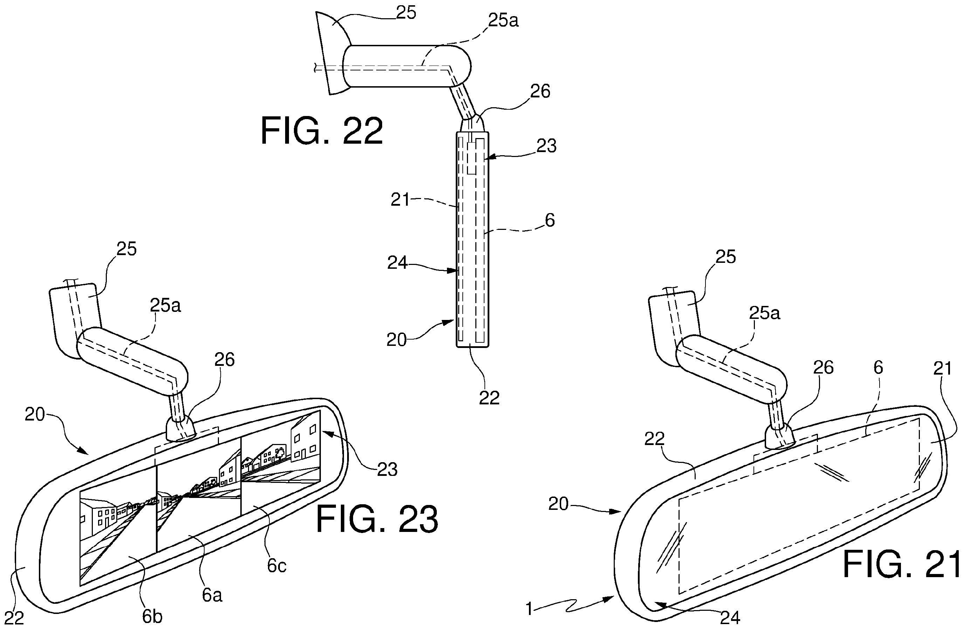

Within the scope of this version, which is not part of the invention, Figures 21-27 refer to embodiments wherein the device 1 comprises a support 20 with which the display 6 is associated; this support 20 also includes at least one mirror 21, which can be used as a rear-view mirror.

According to this aspect, which is not part of the invention, the display 6 and the mirror 21 can be used alternatively one to the other: in particular, the mirror 21 can be used in case of failure of the display 6, or of the video camera 2, or of other parts of the device 1.

More in detail, the support 20 comprises an element 22 having a first surface 23, wherein the display 6 is provided.

The element 22 further comprises a second surface 24, opposed to the first surface 23, wherein the rear-view mirror 21 is provided.

In particular, Figures 21-23 concern an embodiment, which is not part of the invention, wherein the support 20 can be installed inside the passenger compartment of a vehicle V such as a car, a truck, a bus, etc., in place of the normal central rear-view mirror.

In more detail, the support 20 can replace the normal central rear-view mirror in vehicles V (typically cars) in which it is present; in vehicles V where, instead, it is not normally present (for example trucks, buses, etc.) the support 20 could be newly installed.

When viewed from the front, and also from the side - see for example Figure 22 - the element 22 of the support 20 has essentially the same footprint as a normal central rear-view mirror for the passenger compartment of cars, or the like.

It is therefore not necessary to make changes inside the passenger compartment, unless it is to replace the traditional rear-view mirror with the support 20 according to the present invention.

The support 20 further comprises a connecting portion 25 of the element 22 to fixed parts of the vehicle V; in more detail, the connecting portion 25 is suitable for binding the element 22, for example, to the roof of the passenger compartment of the vehicle V.

The connections 25a of the display 6 to the processing unit 5 can go through the connecting portion 25.

According to another aspect, which is not part of the invention, the support 20 comprises a rotating joint 26, which connects the element 22 to the connecting portion 25.

The rotating joint 26 allows the element 22 to be rotated manually with respect to the connecting portion 25, so as to selectively orient the first surface 23, or the second surface 24, towards the driver.

Typically, and in normal conditions of use, the driver orients the first surface 23, comprising the display 6, so that it can be observed during the forward travelling of the vehicle V.

In the event that the driver does not intend to monitor the rear area of the vehicle V via the display 6, or, and most notably, in the event of failure of some component of the device 1 (for example the display 6 itself, or one of the video cameras 2a, 2b, 2c) the driver can manually rotate the element 22 around the rotating joint 26, so as to orient towards themselves the second surface 24, comprising the rear-view mirror 21.

In this way, even in the event of failure of the device 1 or some of its components, the driver can continue to monitor the rear area, albeit with the traditional rear-view mirror vision.

Also in this embodiment, the display 6 comprises three rear viewing portions 6a, 6b, 6c side by side, i.e. a central portion 6a and two side portions 6b, 6c, which display the images taken by the central video camera 2a and by the side video cameras 2b, 2c of vehicle V - respectively.

Unlike what had been previously described, in this embodiment the control 8 is configured to selectively activate or deactivate the rear display function in the support 20, since the display 6 is solely assigned to this function.

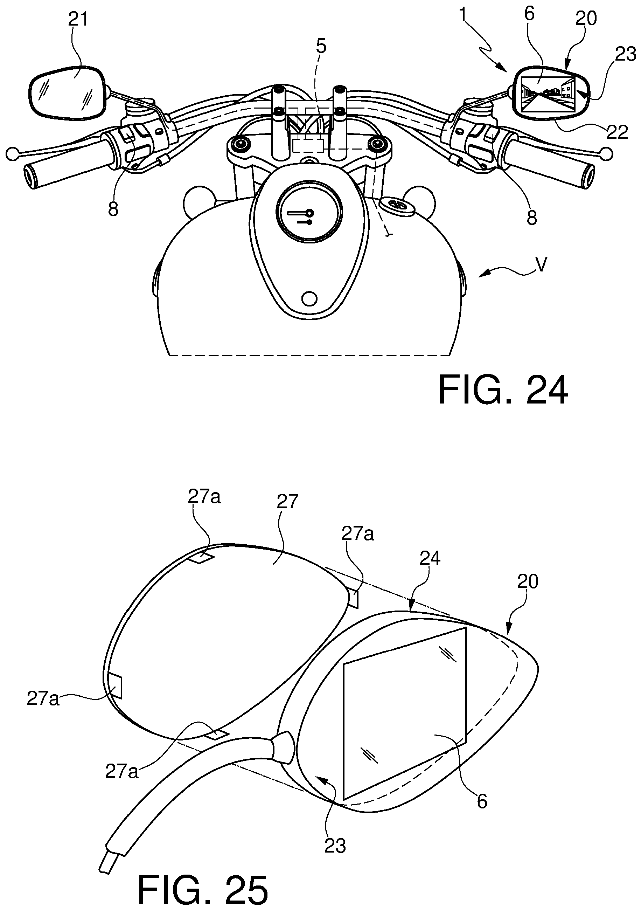

In Figures 24,25 another embodiment, which is not part of the invention, is schematically represented, with characteristics similar to those of the embodiment of Figures 21-23, wherein the vehicle V consists in a motorbike, a moped, or the like. Also in this embodiment, the vehicle V comprises, in place of at least one of the traditional rear-view mirrors 21 (in particular, at least the right one), at least one support 20 having characteristics similar to those described with regard to the embodiment of Figures 21-23.

With regard to the specific characteristics of the device 1 in this embodiment, and in particular to the characteristics of the support 20, reference should be made to what is described with regard to the embodiment of Figures 21-23.

However, this embodiment of the invention includes one additional feature, namely the fact that the support 20 includes at least one protection 27 for one or the other of the surfaces 23,24 of the element 22.

More in detail, since the support 20, while the vehicle V is travelling, is directly exposed to the air and atmospheric agents, the surface 23,24 which is positioned forward can become dirty, wet or damaged.

For this reason, in any condition, the one between the surfaces 23,24, which is not used can be effectively protected, so as to become immediately available in optimal conditions when its use is necessary.

The protection 27 can therefore be removed (fixed for example by interlocking portions 27a or other similar fixing means) so that it can be easily assembled or disassembled as may be necessary, at one or the other of the surfaces 23,24.

In this case, too, the control 8 is configured to selectively activate or deactivate the rear viewing function in the display 6 of the support 20.

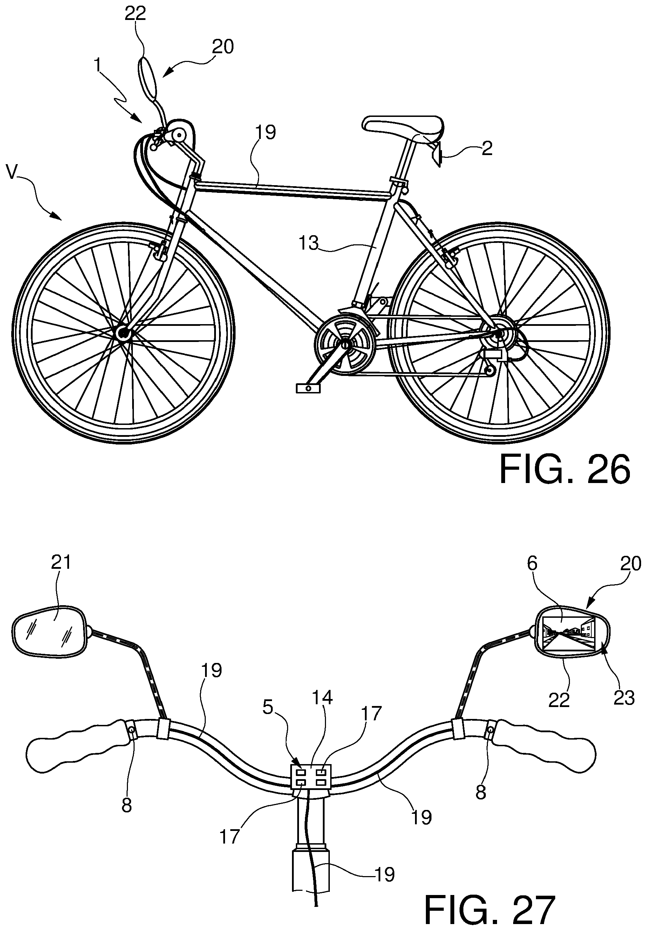

The embodiment of Figures 26, 27 is similar to that of Figures 24, 25, and differs in that the vehicle V is constituted here by a cycle.

In this embodiment, the device 1 can comprise a box-like element 14, to which all the components of the device 1 are operatively connected (for example by means of cables 19).

The box-like element 14 also houses the processing unit 5; the same box-like element 14 can also comprise push buttons 17 for the main control/adjustment operations of the device 1.

The box-like element 14 can be fixed, for example, to the handlebar 15 of the cycle V, in the most convenient and most easily accessible position.

In this case, too, as far as the actuation of the device 1 is concerned, the control 8 is configured to selectively activate or deactivate the rear viewing function in the support 20, at the rider's discretion.

In all the embodiments previously described, the display 6 can be of any known type, and suitable for this type of application.

For example, the display 6 can be of the LCD type, with limited footprint especially as regards thickness; this allows its assembly on even very thin and light supports, which do not, for example, modify the characteristics of the instrument panel 7 of vehicle V.

It is specified that, in all the embodiments previously described, all the connections between components of device 1 of the wired type can be replaced by wireless connections.

The operation of the device 1 according to the invention is, in the light of what has been described, entirely intuitive.

The images taken by the video camera 2 or by the video cameras 2a, 2b, 2c can undergo any treatment and/or processing (carried out by the processing unit 5) before being sent to the display 6; for example, in the case of use in poor visibility conditions (low light, or fog, etc.) the images taken by the video camera 2 may undergo changes/processing (for example for characteristics such as brightness, contrast, or others) in order to be better visible for the driver.

The video camera 2, or the video cameras 2a, 2b, 2c can also be used to facilitate reversing operations, as already happens in some vehicles; in this case, the images taken can be sent - as already happens - to the central display provided on the vehicle's dashboard.

An object of the present invention is also a vehicle V comprising a safety device 1 having the characteristics described above.

In particular, an object of the present invention is a vehicle V consisting of a car, a truck, a bus, , or others, comprising the device 1 according to the present invention. The invention, thus conceived, allows to obtain important technical advantages.

As was clarified, the main advantage of the device 1 according to the present invention is constituted by clear, sharp and complete rear vision during forward travelling of the vehicle V, especially in the case in which the use of traditional rear-view mirrors is hindered or made difficult for some reason (for example, due to the presence of passengers or bulky luggage on vehicle V).

Another advantage consists in the fact that the actuation of the device 1, to activate the rear viewing function at a given moment, is carried out through a very simple and easy control 8 (for example, but not exclusively, manually), which allows the driver not to take their eyes off the direction of travel.

Another advantage consists in the fact that the device 1, in embodiments which are not according to the invention and which are present for illustration purposes only, can be easily integrated/incorporated into elements or components already provided in the vehicle V; we refer in particular to the embodiments of Figures 21-27, wherein the support 20 of the device 1 itself completely replaces at least one of the traditional rear-view mirrors, and does not imply further additional footprint.

These advantages are obtained with simple and inexpensive construction solutions, which do not involve substantial modifications to the vehicles on which the device 1 is installed.

In all the embodiments of the invention illustrated above, or in others which are also possible, and in any case falling within the scope of the present invention, the device 1 allows the driver of the vehicle V to have a full rear view both in normal forward travelling and during reversing operations, thus making the installation of the devices in use today - which are often supplied as options - unnecessary for viewing rear view images in a monitor during reversing operations only.

The adoption of the device 1 which is an object of the present invention would also allow vehicle (for example car) designers to design the bodywork of the rear part of the vehicle without the current constraints in the sizing of the rear pillars or of the rear window to make it possible for the driver to have a rear view through the interior rear-view mirror.

Among the most remarkable advantages are also the resolution of the problem of blind spots, or dead spots, the resolution of the problem of incorrect evaluation of the distances of the current side view mirrors, and also the elimination of the central rear-view mirror, which also improves front end visibility.

Thanks to the solutions according to the present invention, in order to have rear vision, the driver must take their eyes and attention away from the travelling direction of the vehicle for an extremely short period of time, since the images taken by the various cameras are displayed in a single display.

Furthermore, the newly manufactured vehicles could be equipped from the start with the devices provided in the present invention, so as to be able to eliminate the side mirrors and the internal central mirror, with all the advantages already mentioned, as soon as the legislation of each individual country allows it.

The external and internal mirrors could be arranged to be disassembled, and the fixing and routing holes of any cables could be closed with practical and special pre-supplied covers.

In addition, the external mirrors should have a good aerodynamic profile both in the open and closed position, so as to minimize drag in the event that a first regulatory change may allow vehicles equipped with mini-cameras to travel with the external mirrors closed and the internal one raised, subject to their repositioning only in case of malfunction of the display and/or mini-cameras.

The particular version of the invention developed for bicycles is of considerable advantage for riding safety, as the cyclist need never take their hands off the handlebars, neither to obtain a rear view taken by the camera, nor to view sequentially the various pieces of information available on the display.

It has thus been seen how the invention achieves the intended purposes.

The present invention has been described according to preferred embodiments, but equivalent variants can still be conceived without departing from the scope of the appended claims.

## Claims

1. A safety device (1) for vehicles comprising at least one video camera (2;2a,2b,2c), which has a tilt and zoom function, and which is configured to be
installed in a portion of the external rear surface (3) of a vehicle (V), oriented so that its lens faces in the opposite direction to that of the vehicle (V)'s forward travelling direction,
at least one processing unit (5), to which said video camera (2; 2a, 2b, 2c) is operatively connected, suitable for sending the captured images, selectively and at the request of the driver, to a display (6) of the vehicle (V), operationally connected to said processing unit (5) by means of wiring or wireless connections,
and at least one control (8), operatively connected to said processing unit (5), which can be operated by the driver and able to selectively activate said camera (2; 2a, 2b, 2c), and therefore, the rear viewing function on said display (6),
said display (6) being a display already supplied to current vehicles (V), and it consists of the display of the instrument panel (7) of the vehicle (V) positioned frontally with respect to the driver,
said control (8) being configured so as to allow the operating mode to be changed, from the first mode to the second mode, in which the rear view is active, only when the driver actively works on it, so that the driver, only and exclusively when they wish, may decide to instantly change the way in which the display (6) is used to activate the rear view generated by said video cameras (2; 2a, 2b, 2c),
said control (8) comprising at least a button, a lever, a knob, or the like, adapted to be located on a steering wheel (9) or a handlebar (15) of the vehicle (V), on the spokes of the steering wheel (9), or
also in the internal part of the wheel of the steering wheel (9), or said control (8) being of the vocal type,
**characterized in that** said control (8) is configured to selectively modify, at the discretion of the vehicle's (V) driver, the mode of use of said display (6) from a first mode, wherein the rear viewing function is not active, to a second mode, wherein the rear viewing function is active, and vice versa, and wherein in said first mode of use said display (6) operates like a traditional display, i.e. it shows the normal information relating to the vehicle (V), and possibly also graphics and/or images,
and wherein, in said second mode of use, said display (6) is controlled to display, in real time, the images taken by said video camera (2;2a,2b,2c), said display (6) being able to selectively display the images taken by said video camera (2;2a,2b,2c) when the vehicle moves in the forward direction, engaging the entire surface of the display (6) of the instrument panel (7) to have a larger image

2. A device (1) according to claim 1, installable in vehicles (V) such as cars, trucks, buses, and the like, comprising at least three video cameras (2a, 2b, 2c), of which one central camera (2a) that can be installed in the rear area of the vehicle (V), and two side cameras (2b, 2c) that can be installed in positions that allow the driver to have a rear view similar to that currently obtained with the rear-view mirror and side rear-view mirrors.

3. A device (1) according to claim 2, wherein said display (6) comprises at least three rear display portions (6a, 6b, 6c) side by side, i.e. one central portion (6a) and two side portions (6b, 6c), respectively suited to show, in real time, the images taken by said three cameras (2a, 2b, 2c).

4. A device (1) according to claim 1, which can be installed in a newly built vehicle (V).

5. A device (1) according to one of claims 1, suitable for installation in a vehicle (V) already in circulation or already built.

6. A vehicle (V), consisting in a motorcycle, a cycle, a bicycle, or the like, comprising a safety device (1) according to claim 1.

7. A vehicle (V) according to claim 6, comprising a handlebar (15), wherein said control (8) comprises a fixing element (18) to the handlebars (15), and at least one first button or lever (8a), associated with said fixing element (18), suitable for activating/deactivating the second mode of use of said display (6).

8. A vehicle (V) according to claim 7, wherein said control (8) comprises a second button (8b), suitable for the sequential control of the viewing of information in said display (6) in its first mode of use.

9. A vehicle (V), consisting in a car, a bus, a truck or the like, comprising at least one safety device (1) according to claim 1.

## Patentansprüche

1. Sicherheitsvorrichtung (1) für Fahrzeuge, umfassend mindestens eine Videokamera (2; 2a, 2b, 2c), die eine Neige- und Zoomfunktion aufweist und die konfiguriert ist, um in einem Abschnitt der äußeren hinteren Oberfläche (3) eines Fahrzeugs (V) installiert zu werden, die so ausgerichtet ist, dass ihre Linse in die entgegengesetzte Richtung zu derjenigen der Vorwärtsfahrtrichtung des Fahrzeugs (V) zeigt, mindestens eine Verarbeitungseinheit (5), mit der die besagte Videokamera (2; 2a, 2b, 2c) wirkverbunden ist, die geeignet ist, die aufgenommenen Bilder selektiv und auf Anforderung des Fahrers an eine Anzeige (6) des Fahrzeugs (V), die mit der besagten Verarbeitungseinheit (5) mittels drahtgebundener oder drahtloser Verbindungen wirkverbunden ist, zu senden, und mindestens eine Steuerung (8), die mit der besagten Verarbeitungseinheit (5) wirkverbunden ist, die vom Fahrer bedient werden kann und in der Lage ist, die besagte Kamera (2; 2a, 2b, 2c) und somit die Rückblickfunktion auf der besagten Anzeige (6) selektiv zu aktivieren,
wobei die besagte Anzeige (6) eine bereits für aktuelle Fahrzeuge (V) bereitgestellte Anzeige ist, und sie besteht aus der Anzeige der Instrumententafel (7) des Fahrzeugs (V), die frontal zum Fahrer angeordnet ist, wobei die besagte Steuerung (8) so konfiguriert ist, dass sie das Ändern des Betriebsmodus vom ersten Modus zum zweiten Modus, in dem die Rückansicht aktiv ist, nur dann ermöglicht, wenn der Fahrer aktiv darauf einwirkt, sodass der Fahrer nur und ausschließlich dann, wenn er es wünscht, entscheiden kann, die Art, in der die Anzeige (6) zur Aktivierung der von den besagten Videokameras (2; 2a, 2b, 2c) erzeugten Rückansicht verwendet wird, sofort zu ändern,
wobei die besagte Steuerung (8) mindestens einen Druckknopf, einen Hebel, einen Knopf oder dergleichen umfasst, der ausgelegt ist, um an einem Lenkrad (9) oder einer Lenkstange (15) des Fahrzeugs (V), an den Speichen des Lenkrads (9) oder auch im inneren Teil des Rads des Lenkrads (9) angeordnet zu werden, oder wobei die besagte Steuerung (8) vom vokalen Typ ist,
**dadurch gekennzeichnet, dass** die besagte Steuerung (8) konfiguriert ist, um nach dem Ermessen des Fahrers des Fahrzeugs (V) den Verwendungsmodus der besagten Anzeige (6) von einem ersten Modus, worin die Rückblickfunktion nicht aktiv ist, zu einem zweiten Modus, worin die Rückblickfunktion aktiv ist, und umgekehrt selektiv zu ändern, und worin in dem besagten ersten Verwendungsmodus die besagte Anzeige (6) wie eine herkömmliche Anzeige arbeitet, d.h. sie zeigt die normalen Informationen in Bezug auf das Fahrzeug (V) und gegebenenfalls auch Grafiken und/oder Bilder an, und worin in dem besagten zweiten Verwendungsmodus die besagte Anzeige (6) gesteuert wird, um die von der besagten Videokamera (2; 2a, 2b, 2c) aufgenommenen Bilder in Echtzeit anzuzeigen, wobei die besagte Anzeige (6) in der Lage ist, die von der besagten Videokamera (2; 2a, 2b, 2c) aufgenommenen Bilder selektiv anzuzeigen, wenn sich das Fahrzeug in die Vorwärtsrichtung bewegt, wobei die gesamte Oberfläche der Anzeige (6) der Instrumententafel (7) in Anspruch genommen wird, um ein größeres Bild zu haben

2. Vorrichtung (1) nach Anspruch 1, installierbar in Fahrzeugen (V) wie Autos, Lastkraftwagen, Bussen und dergleichen, umfassend mindestens drei Videokameras (2a, 2b, 2c), davon eine mittlere Kamera (2a), die im hinteren Bereich des Fahrzeugs (V) installiert werden kann, und zwei Seitenkameras (2b, 2c), die in Positionen installiert werden können, die es dem Fahrer ermöglichen, eine Rückansicht zu haben, die derjenigen ähnlich ist, die derzeit mit dem Rückspiegel und den Seitenrückspiegeln erhalten wird.

3. Vorrichtung (1) nach Anspruch 2, worin die besagte Anzeige (6) mindestens drei hintere Anzeigeabschnitte (6a, 6b, 6c) nebeneinander umfasst, d.h. einen mittleren Abschnitt (6a) und zwei seitliche Abschnitte (6b, 6c), die jeweils geeignet sind, die von den besagten drei Kameras (2a, 2b, 2c) aufgenommenen Bilder in Echtzeit zu zeigen.

4. Vorrichtung (1) nach Anspruch 1, die in ein neu gebautes Fahrzeug (V) installiert werden kann.

5. Vorrichtung (1) nach einem der Ansprüche 1, geeignet zur Installation in ein bereits im Verkehr befindliches oder bereits gebautes Fahrzeug (V).

6. Fahrzeug (V), bestehend in einem Motorrad, einem Zweirad, einem Fahrrad oder dergleichen, umfassend eine Sicherheitsvorrichtung (1) nach Anspruch 1.

7. Fahrzeug (V) nach Anspruch 6, umfassend eine Lenkstange (15), worin die besagte Steuerung (8) ein Befestigungselement (18) an den Lenkstangen (15) und mindestens einen ersten Druckknopf oder Hebel (8a), verbunden mit dem besagten Befestigungselement (18), umfasst, der zum Aktivieren/Deaktivieren des zweiten Verwendungsmodus der besagten Anzeige (6) geeignet ist.

8. Fahrzeug (V) nach Anspruch 7, worin die besagte Steuerung (8) einen zweiten Druckknopf (8b) umfasst, der für die sequentielle Steuerung des Anzeigens von Informationen in der besagten Anzeige (6) in ihrem ersten Verwendungsmodus geeignet ist.

9. Fahrzeug (V), bestehend in einem Auto, einem Bus, einem Lastkraftwagen oder dergleichen, umfassend mindestens eine Sicherheitsvorrichtung (1) nach Anspruch 1.

## Revendications

1. Dispositif de sécurité (1) pour véhicules comprenant au moins une caméra vidéo (2 ; 2a, 2b, 2c), ayant une fonction d'inclinaison et de zoom, et qui est configurée pour être installée dans une partie de la surface postérieure extérieure (3) d'un véhicule (V), orientée de sorte que sa lentille soit orientée dans la direction opposée à celle de la direction de déplacement vers l'avant du véhicule (V),
au moins une unité de traitement (5), à laquelle ladite caméra vidéo (2 ; 2a, 2b, 2c) est raccordée en fonctionnement, adaptée pour envoyer les images enregistrées, sélectivement et à la demande du conducteur, à un affichage (6) du véhicule (V), raccordé en fonctionnement à ladite unité de traitement (5) par des branchements filaires ou sans fil,
et au moins une commande (8), raccordée en fonctionnement à ladite unité de traitement (5), qui peut être utilisée par le conducteur et capable d'activer sélectivement ladite caméra (2 ; 2a, 2b, 2c),
et par conséquent, la fonction de visualisation arrière sur ledit affichage (6),
ledit affichage (6) étant un affichage déjà fourni aux véhicules (V) actuels, et il est composé de l'affichage du tableau de bord (7) du véhicule (V) positionné frontalement par rapport au conducteur,
ladite commande (8) étant configurée pour permettre de modifier le mode d'utilisation, du premier mode au deuxième mode, dans lequel la vue arrière est active, seulement quand le conducteur travaille activement dessus, de telle sorte que le conducteur, seulement et exclusivement quand il le souhaite, puisse décider de modifier instantanément la façon dont l'affichage (6) est utilisé pour activer la vue arrière générée par lesdites caméras vidéo (2 ; 2a, 2b, 2c),
ladite commande (8) comprenant au moins un bouton, un levier, une molette, ou analogue, adaptés pour être situés sur un volant (9) ou un guidon (15) du véhicule (V), sur les rayons du volant (9), ou aussi dans la partie intérieure de la roue du volant (9), ou ladite commande (8) étant du type vocal,
**caractérisé en ce que** ladite commande (8) est configurée pour modifier sélectivement, à la discrétion du conducteur du véhicule (V), le mode d'utilisation dudit affichage (6) d'un premier mode, dans lequel la fonction de vue arrière n'est pas active, à un deuxième mode, dans lequel la fonction de vue arrière est active, et vice versa, et dans lequel dans ledit premier mode d'utilisation ledit affichage (6) fonctionne comme un affichage traditionnel, c'est-à-dire qu'il montre les informations normales relatives au véhicule (V), et éventuellement également des graphiques et/ou des images, et dans lequel, dans ledit deuxième mode d'utilisation, ledit affichage (6) est commandé pour afficher, en temps réel, les images prises par ladite caméra vidéo (2 ; 2a, 2b, 2c), ledit affichage (6) pouvant afficher sélectivement les images prises par ladite caméra vidéo (2 ; 2a, 2b, 2c) quand le véhicule se déplace vers l'avant, engageant la surface totale de l'affichage (6) du tableau de bord (7) pour avoir une image plus grande

2. Dispositif (1) selon la revendication 1, installable dans des véhicules (V) tels que des voitures, des camions, des bus, et analogue, comprenant au moins trois caméras vidéo (2a, 2b, 2c), dont une caméra centrale (2a) qui peut être installée dans la zone arrière du véhicule (V), et deux caméras latérales (2b, 2c) qui peuvent être installées dans des positions permettant au conducteur d'avoir une vue arrière similaire à celle actuellement obtenue avec le rétroviseur central et les rétroviseurs latéraux.

3. Dispositif (1) selon la revendication 2, dans lequel ledit affichage (6) comprend au moins trois parties d'affichage arrière (6a, 6b, 6c) côte à côte, c'est-à-dire une partie centrale (6a) et deux parties latérales (6b, 6c), respectivement adaptées pour montrer, en temps réel, les images prises par lesdites trois caméras (2a, 2b, 2c).

4. Dispositif (1) selon la revendication 1, qui peut être installé dans un véhicule (V) qui vient d'être construit.

5. Dispositif (1) selon la revendication 1, adapté pour être installé dans un véhicule (V) déjà en circulation ou déjà construit.

6. Véhicule (V), représenté par une motocyclette, un vélo, une bicyclette, ou analogue, comprenant un dispositif de sécurité (1) selon la revendication 1.

7. Véhicule (V) selon la revendication 6, comprenant un guidon (15), dans lequel ladite commande (8) comprend un élément de fixation (18) au guidon (15), et au moins un premier bouton ou levier (8a), associé audit élément de fixation (18), adapté pour activer/désactiver le deuxième mode d'utilisation dudit affichage (6).

8. Véhicule (V) selon la revendication 7, dans lequel ladite commande (8) comprend un deuxième bouton (8b), adapté pour la commande séquentielle de la visualisation d'informations dans ledit affichage (6) dans son premier mode d'utilisation.

9. Véhicule (V), représenté par une voiture, un bus, un camion ou analogue, comprenant au moins un dispositif de sécurité (1) selon la revendication 1.
